(19)

Europäisches
Patentamt
European
Patent Office
Office européen
des brevets

(11) **EP 4 414 891 A1**

(12) **EUROPEAN PATENT APPLICATION**
published in accordance with Art. 153(4) EPC

(43) Date of publication:
**14.08.2024 Bulletin 2024/33**

(21) Application number: **22885672.0**

(22) Date of filing: **12.10.2022**

(51) International Patent Classification (IPC):
*G06N 3/04* (2023.01)

(52) Cooperative Patent Classification (CPC):
**G06N 3/04; G06N 3/0464; G06N 3/084;**
Y02D 10/00

(86) International application number:
**PCT/CN2022/124843**

(87) International publication number:
**WO 2023/071793 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.10.2021 CN 202111271593**

(71) Applicant: **Huawei Technologies Co., Ltd.
Shenzhen, Guangdong 518129 (CN)**

(72) Inventors:
• **WU, Jiajun
Beijing 100191 (CN)**
• **SUN, Chengjian
Beijing 100191 (CN)**
• **YANG, Chenyang
Beijing 100191 (CN)**
• **WANG, Jian
Shenzhen, Guangdong 518129 (CN)**
• **LI, Rong
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **NEURAL NETWORK CONSTRUCTION METHOD AND APPARATUS**

(57)     This application provides a neural network construction method. The method includes: generating parameters of a target neural network based on a parameter generation network, where input of the parameter generation network includes information about a relative number of a neuron in the target neural network, the relative number of the neuron represents a relative location of the neuron at a first neural network layer, and the first neural network layer is a layer at which the neuron in the target neural network is located; and constructing the target neural network based on the parameters of the target neural network. The parameters of the target neural network are generated by inputting the information about the relative number of the neuron into the target neural network, so that the parameter generation network has better generalization for constructing target neural networks of different dimensions.

FIG. 4

## Description

This application claims priority to Chinese Patent Application No. 202111271593.1, filed with the China National Intellectual Property Administration on October 29, 2021 and entitled "NEURAL NETWORK CONSTRUCTION METHOD AND APPARATUS", which is incorporated herein by reference in its entirety.

## TECHNICAL FIELD

This application relates to the field of artificial intelligence, and more specifically, to a neural network construction method and apparatus.

## BACKGROUND

With rapid development of artificial intelligence (artificial intelligence, AI) technologies, a neural network (for example, a deep neural network) has scored great achievements in processing and analyzing multimedia signals such as an image, a video, and voice in recent years. Parameters of the neural network are usually updated and trained by using a gradient back propagation method, and a plurality of rounds of gradient back propagation may result in huge computing and energy consumption overheads. To better construct a neural network, a method for constructing a neural network (a target neural network) by using a parameter generation network is provided. To be specific, parameters of the target neural network are generated by using the parameter generation network. Simply, parameters of a network (the target neural network) are generated by using another network (the parameter generation network).

When the target neural network is used to resolve a resource allocation problem in a wireless communication system, for example, the parameter generation network may be used to generate the parameters of the target neural network. However, due to a dynamic characteristic of the wireless communication system, a quantity of users participating in resource allocation changes over time, for example, some users join the wireless communication system, and some other users leave the wireless communication system. In this case, if a target neural network of a fixed scale is used to resolve the problem, a plurality of neural networks of different scales need to be trained for various possible input dimensions (for example, a quantity of users), which increases computing and storage overheads.

Therefore, how to consider a scale of a neural network processing task when generating parameters of a target neural network by using a parameter generation network is a problem that urgently needs to be resolved.

## SUMMARY

This application provides a neural network construction method and apparatus, so that a scale of a neural network processing task can be considered, thereby making a target neural network have better generalization.

According to a first aspect, a neural network construction method is provided. The method includes: generating parameters of a target neural network based on a parameter generation network, where input of the parameter generation network includes information about a relative number of a neuron in the target neural network, the relative number of the neuron represents a relative location of the neuron at a first neural network layer, and the first neural network layer is a layer at which the neuron in the target neural network is located; and constructing the target neural network based on the parameters of the target neural network.

According to the method provided in this embodiment of this application, the parameter generation network generates the parameters of the target neural network by inputting the information about the relative number of the neuron into the target neural network, so that the parameter generation network has better generalization for constructing target neural networks of different scales.

With reference to the first aspect, in some implementations of the first aspect, N parameter generation networks are obtained, where N is determined by a quantity M of parameter categories of the target neural network and a quantity L of hidden layers of the target neural network, and M and L are positive integers.

With reference to the first aspect, in some implementations of the first aspect, the target neural network includes a second neural network layer and a third neural network layer, the second neural network layer includes $N_1$ neurons, and the third neural network layer includes $N_2$ neurons; and a relative number of an $i^{th}$ neuron at the second neural network layer and a relative number of a $j^{th}$ neuron at the third neural network layer are input into a first parameter generation network, to generate a weight parameter of a connection between the $i^{th}$ neuron at the second neural network layer and the $j^{th}$ neuron at the third neural network layer, where the first parameter generation network is a parameter generation network in the N parameter generation networks that is used to generate a weight parameter between the second neural network layer and the third neural network layer, $1 \leq i \leq N_1$, and $1 \leq j \leq N_2$.

With reference to the first aspect, in some implementations of the first aspect, the target neural network includes a second neural network layer, the second neural network layer includes $N_1$ neurons, and a relative number of an $i^{th}$

neuron at the second neural network layer is input into a second parameter generation network, to generate a bias parameter on the $i^{th}$ neuron at the second neural network layer, where the second parameter generation network is a parameter generation network in the N parameter generation networks that is used to generate a bias parameter of the second neural network layer, and $1 \leq i \leq N_1$.

With reference to the first aspect, in some implementations of the first aspect, the quantity L of hidden layers of the target neural network and a quantity of neurons at each of the L hidden layers are determined based on a scale of a processing task of the target neural network, where L is a positive integer.

With reference to the first aspect, in some implementations of the first aspect, the parameter generation network is trained based on training data of the processing task of the target neural network.

With reference to the first aspect, in some implementations of the first aspect, training data is sorted, where the training data is the training data of the processing task of the target neural network; the sorted training data is input into the target neural network to obtain output of the target neural network; and parameters of the parameter generation network are updated based on a loss function, to train the parameter generation network, where the loss function is used to update the parameters of the parameter generation network based on the output of the target neural network and a label of the training data.

With reference to the first aspect, in some implementations of the first aspect, if the scale of the processing task of the target neural network changes, the quantity of neurons at each of the L hidden layers is re-determined based on the scale of the processing task; and the parameters of the target neural network are updated by using the trained parameter generation network.

According to a second aspect, a neural network construction apparatus is provided. The apparatus includes a processing unit, configured to: generate parameters of a target neural network based on a parameter generation network, where input of the parameter generation network includes information about a relative number of a neuron in the target neural network, the relative number of the neuron represents a relative location of the neuron at a first neural network layer, and the first neural network layer is a layer at which the neuron in the target neural network is located. The processing unit is further configured to construct the target neural network based on the parameters of the target neural network.

With reference to the second aspect, in some implementations of the second aspect, the apparatus further includes an obtaining unit, configured to obtain N parameter generation networks, where N is determined by a quantity M of parameter categories of the target neural network and a quantity L of hidden layers of the target neural network, and M and L are positive integers.

With reference to the second aspect, in some implementations of the second aspect, the target neural network includes a second neural network layer and a third neural network layer, the second neural network layer includes $N_1$ neurons, and the third neural network layer includes $N_2$ neurons; and the processing unit is specifically configured to input a relative number of an $i^{th}$ neuron at the second neural network layer and a relative number of a $j^{th}$ neuron at the third neural network layer into a first parameter generation network, to generate a weight parameter of a connection between the $i^{th}$ neuron at the second neural network layer and the $j^{th}$ neuron at the third neural network layer, where the first parameter generation network is a parameter generation network in the N parameter generation networks that is used to generate a weight parameter between the second neural network layer and the third neural network layer, $1 \leq i \leq N_1$, and $1 \leq j \leq N_2$.

With reference to the second aspect, in some implementations of the second aspect, the target neural network includes a second neural network layer, the second neural network layer includes $N_1$ neurons, and the processing unit is specifically configured to input a relative number of an $i^{th}$ neuron at the second neural network layer into a second parameter generation network, to generate a bias parameter on the $i^{th}$ neuron at the second neural network layer, where the second parameter generation network is a parameter generation network in the N parameter generation networks that is used to generate a bias parameter of the second neural network layer, and $1 \leq i \leq N_1$.

With reference to the second aspect, in some implementations of the second aspect, the processing unit is further configured to determine the quantity L of hidden layers of the target neural network and a quantity of neurons at each of the L hidden layers based on a scale of a processing task of the target neural network, where L is a positive integer.

With reference to the second aspect, in some implementations of the second aspect, the processing unit is further configured to train the parameter generation network based on training data of the processing task of the target neural network.

With reference to the second aspect, in some implementations of the second aspect, the processing unit is specifically configured to: sort training data, where the training data is the training data of the processing task of the target neural network; input the sorted training data into the target neural network to obtain output of the target neural network; and update parameters of the parameter generation network based on a loss function, to train the parameter generation network, where the loss function is used to update the parameters of the parameter generation network based on the output of the target neural network and a label of the training data.

With reference to the second aspect, in some implementations of the second aspect, the processing unit is further configured to: if the scale of the processing task of the target neural network changes, re-determine the quantity of neurons at each of the L hidden layers based on the scale of the processing task; and update the parameters of the target neural network by using the trained parameter generation network.

According to a third aspect, a neural network construction apparatus is provided. The apparatus includes: a memory, configured to store a program; and a processor, configured to execute the program stored in the memory. When the program stored in the memory is executed, the processor is configured to perform the method in any implementation of the first aspect.

According to a fourth aspect, a computer-readable medium is provided. The computer-readable medium stores program code to be executed by a device, and the program code is used to perform the method in any implementation of the first aspect.

According to a fifth aspect, a computer program product including instructions is provided. When the computer program product runs on a computer, the computer is enabled to perform the method in any implementation of the first aspect.

According to a sixth aspect, a chip is provided. The chip includes a processor and a data interface, and the processor reads, by using the data interface, instructions stored in a memory to perform the method in any implementation of the first aspect.

Optionally, in an implementation, the chip may further include the memory, the memory stores the instructions, the processor is configured to execute the instructions stored in the memory, and when the instructions are executed, the processor is configured to perform the method in any implementation of the first aspect.

## BRIEF DESCRIPTION OF DRAWINGS

FIG. 1 is a schematic diagram of an artificial intelligence main framework according to an embodiment of this application;

FIG. 2 is a schematic diagram of a structure of a parameter generation network;

FIG. 3 is a schematic diagram of a structure of a system architecture according to an embodiment of this application;

FIG. 4 is a schematic flowchart of a neural network construction method according to an embodiment of this application;

FIG. 5 is a schematic diagram of a structure of a parameter generation network according to an embodiment of this application;

FIG. 6 is a schematic diagram of constructing a target neural network by using a parameter generation network according to an embodiment of this application;

FIG. 7 is a schematic diagram of training a parameter generation network according to an embodiment of this application;

FIG. 8 is a diagram of a function relationship between bias parameter values of target neural networks of different dimensions and relative numbers of neurons according to an embodiment of this application;

FIG. 9 is a schematic flowchart of another neural network construction method according to an embodiment of this application;

FIG. 10 is a schematic flowchart of another neural network construction method according to an embodiment of this application;

FIG. 11 is a schematic flowchart of another neural network construction method according to an embodiment of this application;

FIG. 12 is a schematic block diagram of a neural network construction apparatus according to an embodiment of this application; and

FIG. 13 is a schematic diagram of a hardware structure of a neural network construction apparatus according to an embodiment of this application.

## DESCRIPTION OF EMBODIMENTS

The following describes technical solutions in this application with reference to accompanying drawings.

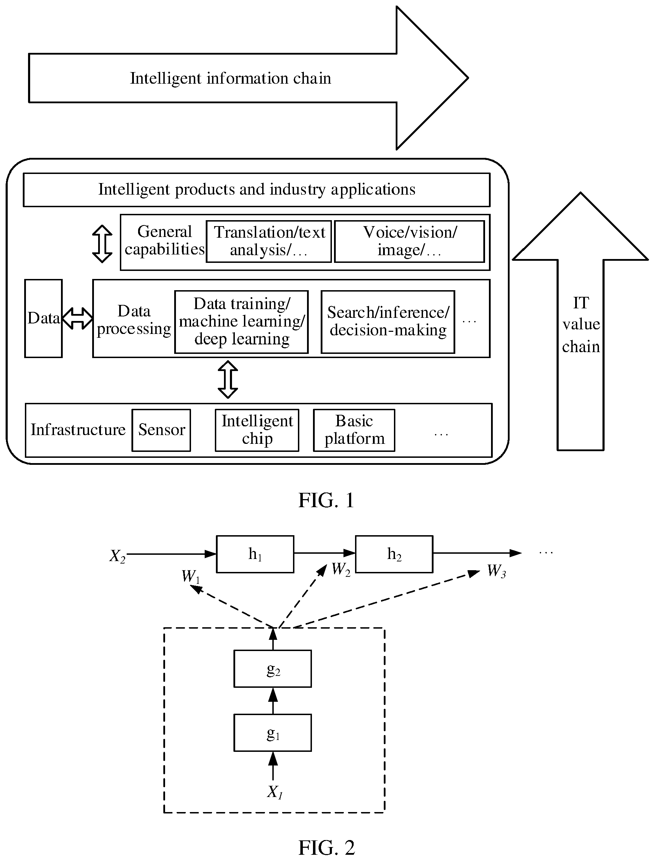

FIG. 1 is a schematic diagram of an artificial intelligence main framework. The main framework describes an overall working procedure of an artificial intelligence system, and is applicable to a general requirement of the artificial intelligence field.

The following describes in detail the foregoing artificial intelligence main framework from two dimensions: an "intelligent information chain" (a horizontal axis) and an "information technology (information technology, IT) value chain" (a vertical axis).

The "intelligent information chain" reflects a series of processes from data obtaining to processing. For example, the process may be a general process of intelligent information perception, intelligent information representation and formation, intelligent inference, intelligent decision-making, and intelligent execution and output. In this process, the data undergoes a refinement process of "data-information-knowledge-intelligence".

The "IT value chain", from the underlying artificial intelligence infrastructure and information (provision and processing of technical implementation) to an industrial ecological process of the system, reflects the value that artificial intelligence contributes to the information technology industry.

(1) Infrastructure:

An infrastructure provides computing capability support for the artificial intelligence system, implements communication with the external world, and implements support by using a basic platform.

The infrastructure may communicate with the outside by using a sensor, and a computing capability of the infrastructure may be provided by an intelligent chip.

The intelligent chip herein may be a hardware acceleration chip such as a central processing unit (central processing unit, CPU), a neural-network processing unit (neural-network processing unit, NPU), a graphics processing unit (graphics processing unit, GPU), an application-specific integrated circuit (application-specific integrated circuit, ASIC), or a field programmable gate array (field programmable gate array, FPGA).

The basic platform of the infrastructure may include related platform assurance and support such as a distributed computing framework and a network, and may include cloud storage and computing, an interconnection and interworking network, and the like.

For example, the infrastructure may communicate with the outside by using the sensor, to obtain data, and then provide, for computing, the data to an intelligent chip in a distributed computing system provided by the basic platform.

(2) Data:

Data at an upper layer of the infrastructure indicates a data source in the artificial intelligence field. The data relates to a graph, an image, speech, and text, further relates to internet of things data of a conventional device, and includes service data of an existing system and perception data such as force, displacement, a liquid level, a temperature, and humidity.

(3) Data processing:

The foregoing data processing usually includes a processing manner such as data training, machine learning, deep learning, search, inference, or decision-making.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. Typical functions are searching and matching.

Decision-making is a process of deciding after intelligent information is inferred, and usually provides functions such as classification, sorting, and prediction.

(4) General capabilities:

After data processing mentioned above is performed on data, some general capabilities, for example, an algorithm or a general system, such as translation, text analysis, computer vision processing, voice recognition, and image recognition, may be further formed based on a data processing result.

(5) Intelligent products and industry applications:

Intelligent products and industry applications are products and applications of the artificial intelligence system in various fields, and are encapsulation of an overall solution of artificial intelligence, so that decision-making for intelligent information is productized and an application is implemented. Application fields thereof mainly include intelligent manufacturing, intelligent transportation, intelligent home, intelligent healthcare, intelligent security protection, autonomous driving, a safe city, an intelligent terminal, and the like.

Embodiments of this application may be applied to many fields of artificial intelligence, for example, fields such as intelligent manufacturing, intelligent transportation, intelligent home, intelligent healthcare, intelligent security protection, autonomous driving, and a safe city.

Specifically, embodiments of this application may be applied to fields in which a (deep) neural network needs to be used, for example, autonomous driving, image classification, image retrieval, image semantic segmentation, image quality enhancement, image super-resolution processing, and natural language processing.

Because embodiments of this application relate to a neural network, for ease of understanding, the following first describes terms and concepts related to the neural network that may be used in embodiments of this application.

(1) Neural network (neural network, NN)

A neural network may be an algorithm mathematical model including neurons. The neuron refers to an operation unit that uses $x_s$ and an intercept 1 as input. Output of the operation unit may be represented by using Formula (1):

$$h_{W,b}(x) = f(W^T x) = f(\sum_{s=1}^{n} W_s x_s + b) \qquad (1),$$

, where

s represents a dimension of the input $x_s$, s=1, 2, ..., or n, n is a natural number greater than 1, $W_s$ is a weight of $x_s$, and b represents a bias. f represents an activation function (activation functions), and the activation function is used to perform non-linear transformation on a feature in the neural network, to convert an input signal in the neuron into an output signal. The output signal of the activation function may be used as input of a next-layer neural unit. For example, the activation function may be a sigmoid function. The neural network is a network formed by connecting a plurality of the foregoing individual neurons. In other words, output of a neuron may be input of another neuron. Input of each neuron may be connected to a local receptive field of a previous layer to extract a feature of the local receptive field. The local receptive field may be a region formed by several neural units.

(2) Deep neural network (deep neural network, DNN)

A deep neural network, also referred to as a multi-layer neural network, may be understood as a neural network including a plurality of hidden layers. The DNN is divided based on locations of different layers. Neural networks in the DNN may be classified into three types: an input layer, a hidden layer, and an output layer. Generally, the first layer is the input layer, the last layer is the output layer, and middle layers are hidden layers. The layers may be fully-connected, to be specific, any neuron at an $i^{th}$ layer is connected to any neuron at an $(i+1)^{th}$ layer. Simply, this is represented by using the following linear relationship:

$$\vec{y} = \alpha(W \cdot \vec{x} + \vec{b}) \qquad (2),$$

where

$\bar{x}$ is an input vector, $\bar{y}$ is an output vector, $\bar{b}$ is an offset vector, W is a weight matrix (also referred to as a coefficient), and $\alpha$ is an activation function. This operation is performed on an input vector $\bar{x}$ of each of the hidden layers to obtain an output vector $\bar{y}$. Because the DNN includes a large quantity of layers, there are also a large quantity of coefficients W and quantity of offset vectors $\bar{b}$. These parameters are defined in the DNN as follows: A coefficient is used as an example. It is assumed that in a three-layer DNN, a linear coefficient from the fourth neuron at a second layer to the second neuron at a third layer is defined as $W_{24}^{3}$. The superscript 3 represents a quantity of layers at which the coefficient W is located, and the subscript corresponds to an output third-layer index 2 and an input second-layer index 4.

In conclusion, a coefficient from a $k^{th}$ neuron at an $(L-l)^{th}$ layer to a $j^{th}$ neuron at an $L^{th}$ layer is defined as $W_{jk}^{L}$.

It should be noted that the input layer does not have a W parameter. In the deep neural network, it can be learned from the universal approximation theorem that any function can be fitted by using the DNN with any precision provided that sufficient hidden layers are given. In other words, more hidden layers enable the network to describe complex situations in the real world. Theoretically, a model with more parameters has higher complexity and a larger "capacity". It indicates that the model can complete a more complex learning task. Training the deep neural network is a process of learning a weight matrix, and a final objective of training is to obtain weight matrices (weight matrices formed by vectors W of many layers) of all layers of the deep neural network through training.

(3) Convolutional neural network

A convolutional neural network (convolutional neuron network, CNN) is a neural network with a convolutional structure. The convolutional neural network includes a feature extractor that includes a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neural units arranged in a rectangle. Neural units in a same feature plane share a weight, and the weight shared herein is a convolution kernel. Weight sharing may mean that an image information extraction manner is irrelevant to a location. In a training process of the convolutional neural network, a convolution kernel may obtain a proper weight through learning. In addition, benefits directly brought by weight sharing are that connections between layers of the convolutional neural network are reduced, and an overfitting risk is reduced.

(4) Loss function (loss function)

A specific manner of training a neural network is to evaluate an output result of the neural network by using a loss function, and propagate an error backward, so that $W$ and $b$ can be iteratively optimized by using a gradient descent method until the loss function reaches a minimum value. In a process of training a deep neural network, because it is expected that output of the deep neural network is as close as possible to a value that actually needs to be predicted, a current predicted value of the network and an actually expected target value may be compared, and then a weight vector of each layer of neural network is updated based on a difference between the current predicted value and the target value (where certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to determine the difference between the predicted value and the target value through comparison" needs to be predefined. This is the role of the loss function or an objective function (objective function), which is used to measure the difference between the predicted value and the target value. The loss function is used as an example. A larger output value (loss) of the loss function indicates a larger difference. Therefore, training of the deep neural network is a process of minimizing the loss.

(5) Back propagation algorithm

In a training process, a neural network may correct a value of a parameter of a neural network model according to a gradient back propagation (back propagation, BP) algorithm, so that a reconstruction error loss of the neural network model becomes increasingly small. Specifically, the error loss is generated when an input signal is transferred forward and output, and the parameter of the neural network model is updated through back propagation of information about the error loss, to converge the error loss. The back propagation algorithm is an error-loss-centered back propagation motion, and is intended to obtain a parameter, such as a weight matrix, of an optimal neural network model.
For example, a loss value generated each time the neural network model is trained is transferred backward layer by layer in the neural network model. When the loss value is transferred to each layer, an update amount of parameters at the layer is calculated (a partial derivative operation). The update amount is related to a gradient (gradient).
The following describes terms that may be used in this application.

(1) Permutation equivariance (permutation equivalence, PE)

For given input $X = [x_1, x_2, ..., x_k]$, if an equation $Y = f(X) = [y_1, y_2, ..., y_k]$ meets $\tilde{Y} = f(\tilde{X}) = [y_{p1}, y_{p2}, ..., y_{pk}]$ for any permutation $\pi(x) = p_k$ and $\tilde{X} = [x_{p1}, x_{p2}, ..., x_{pk}]$, the equation $f$ is permutation-equivariant for $X$. In other words, permutation equivariance makes an order of output of the function correspond to an order of input.
For example, for a resource allocation problem in a wireless communication system, the following Formula (3) is shown:

$$\max_{\mathbf{p}} \quad J(\mathbf{h}, \mathbf{p})$$
$$s.t. \quad C(\mathbf{h}, \mathbf{p}) \leq 0 \tag{3},$$

where

$\mathbf{p} \triangleq [p_1,..., p_K]$ represents a resource allocation policy, $\mathbf{h} \triangleq [h_1,..., h_K]$ represents an environment status, and $p_k$ and $h_k$ respectively represent a policy and a status of an object $k$, and C (-) represents a constraint. An optimal allocation policy $\mathbf{p}^*$ may be considered as a function of the environment status $\mathbf{h}$. When a location transformation occurs on a status of each object in $\mathbf{h}$, the same transformation also occurs on a location of an optimal policy of each object in $\mathbf{p}^*$. In other words, the resource allocation problem in the wireless communication system has permutation equivariance. If elements $\mathbf{h} \triangleq [h_1,...,h_K]$ in the environment status are permuted, the same permutation occurs on elements in a policy $\mathbf{p} \triangleq [p_1,..., p_K]$ obtained by solving the problem (1).

(2) Parameter generation network

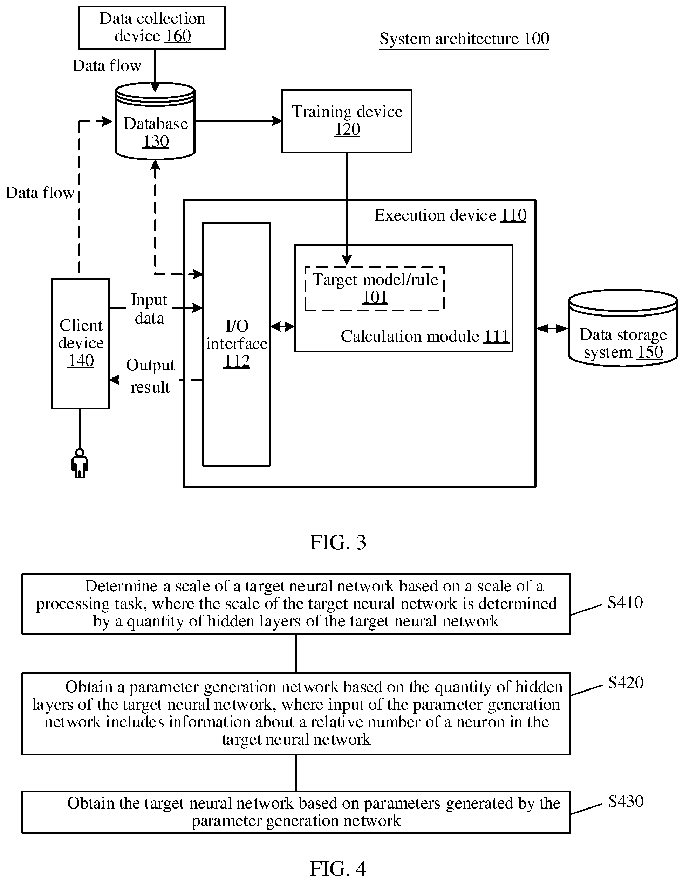

In a conventional method, parameters of a neural network (target neural network) are usually directly trained by using training data, and a parameter generation network can output parameters of a target model. Simply, parameters of a network (the target neural network) are generated by using another network (the parameter generation network).
FIG. 2 is a schematic diagram of a structure of a parameter generation network (Hypernetwork). $h_1$ and $h_2$ represent hidden-layer nodes of a fully-connected network (a neural network), $W_1$, $W_2$, and $W_3$ represent model parameters of each layer of the fully-connected network, $g_1$ and $g_2$ represent parameters of the parameter generation network, and $X_2$ and $X_1$ represent input of a target neural network and the parameter generation network. $W_1$, $W_2$, and $W_3$ are obtained by the parameter generation network based on related information about a hidden layer and a weight. During learning of the fully-connected network, input of the parameter generation network is number information of a fully-connected network model parameter. During learning of a CNN, input of the parameter generation network is an embedded vector that is about a CNN model parameter and that is obtained through learning.
When generating the parameters of the target neural network, the parameter generation network does not consider a change of a scale of the target neural network. In other words, the parameter generation network has no generalization capability for problems of different scales. In some application scenarios of a neural network, for example, when the neural network is used to resolve a resource allocation problem in a wireless communication system, due to a dynamic characteristic of the wireless communication system, a quantity of users participating in radio resource allocation changes over time (for example, some users join the wireless communication system, and some other users leave the wireless communication system). In this case, if a fixed-dimension neural network is used to resolve the resource allocation problem, a plurality of neural networks of different dimensions need to be trained for various possible quantities of users, which increases computing and storage overheads.
In view of this, embodiments of this application provide a neural network construction method. In the method, a group of parameter generation network may be used to generate, with low complexity, parameters of a group of target neural networks for processing tasks of different scales. Therefore, the parameter generation network has better generalization for generating target neural networks of different scales.
Before the neural network construction method provided in embodiments of this application is described, a system architecture applicable to embodiments of this application is first described. As shown in FIG. 3, an embodiment of this application provides a system architecture 100. The system architecture 100 includes an execution device 110, a training device 120, a database 130, a client device 140, a data storage system 150, and a data collection device 160.
In addition, the execution device 110 includes a calculation module 111, an I/O interface 112, a preprocessing module 113, and a preprocessing module 114. The calculation module 111 may include a target model/rule 101, and the preprocessing module 113 and the preprocessing module 114 are optional.
The data collection device 160 is configured to collect training data. For a method for generating a parameter of a neural network in this embodiment of this application, the training data may include a training image (for example, the training image includes an object) and annotation data. The annotation data provides a type of the object in the training image. For another example, in a power control task in a wireless communication system, the training data may be channel data between a terminal device and a base station, and the annotation data is an optimal power allocation result under a condition of the channel data. After collecting the training data, the data collection device 160 stores the training data in the database 130, and the training device 120 obtains the target model/rule 101 through training based on the training data maintained in the database 130.
The following describes how the training device 120 obtains the target model/rule 101 based on the training data. The training device 120 processes input original data, and compares an output value with a target value until a difference between the value output by the training device 120 and the target value is less than a specific threshold, to complete training of the target model/rule 101.
The target model/rule 101 in this embodiment of this application may be specifically a neural network model, for example, a BP neural network. It should be noted that in actual application, the training data maintained in the database 130 does not necessarily collected by the data collection device 160, and may be received from another device. In addition, it should be noted that the training device 120 does not necessarily train the target model/rule 101 completely based on the training data maintained in the database 130, and may obtain training data from a cloud or another place to perform model training. The foregoing descriptions should not be construed as a limitation on embodiments of this application.

The target model/rule 101 obtained through training by the training device 120 may be applied to different systems or devices, for example, applied to the execution device 110 shown in FIG. 1. The execution device 110 may be a terminal such as a mobile phone terminal, a tablet computer, a notebook computer, an augmented reality (augmented reality, AR)/virtual reality (virtual reality, VR) terminal, or a vehicle-mounted terminal; or may be a server, a cloud, or the like. In FIG. 3, the input/output (input/output, I/O) interface 112 is configured in the execution device 110, to exchange data with an external device. A user may input data into the I/O interface 112 by using the client device 140. In this embodiment of this application, the input data may include a to-be-processed image input by the client device. The client device 140 herein may be specifically a terminal device.

In a process in which the execution device 110 preprocesses the input data, or in a process in which the calculation module 111 of the execution device 110 performs related processing such as calculation, the execution device 110 may invoke data, code, and the like in the data storage system 150 for corresponding processing, and may further store, in the data storage system 150, data, instructions, and the like that are obtained through corresponding processing.

Finally, the I/O interface 112 presents, to the client device 140, a processing result, for example, a target detection result calculated based on the target model/rule 101, so that the client device 140 provides the processing result for the user.

It should be noted that the training device 120 may generate corresponding target models/rules 101 for different targets or different tasks based on different training data. The corresponding target models/rules 101 may be used to achieve the foregoing targets or complete the foregoing tasks, to provide a required result for the user. In this embodiment of this application, the target model/rule 101 obtained through training by the training device 120 may be a target neural network and/or a parameter generation network.

In FIG. 3, the user may manually provide input data, and the manual provision may be performed by using a user interface provided by the I/O interface 112. In another case, the client device 140 may automatically send input data to the I/O interface 112. If the client device 140 needs to obtain authorization from the user to automatically send the input data, the user may set corresponding permission in the client device 140. The user may view, on the client device 140, a result output by the execution device 110. The result may be specifically presented through display, a sound, an action, or the like. The client device 140 may alternatively be used as a data collection end, to collect, as new sample data, input data input into the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input into the I/O interface 112 and the output result output from the I/O interface 112 that are shown in the figure.

It should be noted that FIG. 3 is merely a schematic diagram of a system architecture according to an embodiment of this application. A location relationship between devices, components, modules, and the like shown in the figure does not constitute any limitation. For example, in FIG. 3, the data storage system 150 is an external memory relative to the execution device 110, but in another case, the data storage system 150 may alternatively be disposed in the execution device 110.

FIG. 4 is a schematic flowchart of a neural network construction method according to this application. The method includes at least the following several steps.

S410: Determine a scale of a target neural network based on a scale of a processing task.

The scale of the processing task may indicate a complexity degree of the processing task of the target neural network. The scale of the processing task may be measured by using a scale of input of the processing task. For example, in an image processing task, a scale of the processing task may be measured by using a size of an image. A larger size of the image indicates a larger scale of the image processing task. For example, the size of the input image is 32*32. For another example, when a radio resource allocation task is processed, a scale of the processing task may be measured by using a quantity of users participating in radio resource allocation. A larger quantity of users participating in radio resource allocation may indicate a larger scale of the radio resource allocation problem. Generally, a learning capability of the target neural network is limited by a quantity of parameters of the target neural network, and the quantity of parameters depends on a quantity of neurons. Therefore, after the scale of a processing task of the target neural network increases, the quantity of neurons in the neural network needs to be increased, to improve the learning capability of the neural network and avoid a problem that a correct result cannot be obtained through learning because a quantity of parameters of the neural network is excessively small.

The target neural network may be denoted as $\tilde{p}(h; W, b)$, where $h$ represents input of the target neural network, $\tilde{p}$ represents output of the target neural network, and $W$ and $b$ respectively represent a weight parameter and a bias parameter of the target neural network. The scale of the target neural network may be represented by a quantity $L$ of hidden layers of the neural network and a quantity $N_l$ of neurons at each hidden layer, where $1 \leq l \leq L$. For a target neural network for resolving a specific problem, a quantity of hidden layers of the target neural network may be set to a fixed quantity of layers based on experience. When a scale of a processing task changes, for example, a quantity of users participating in radio resource allocation changes, a quantity of neurons at each hidden layer of the target neural network may be changed to change a scale of the target neural network. In other words, the quantity of hidden layers of the target neural network is fixed, and is $L$, and the quantity of neurons at each hidden layer of the target neural network is determined by the scale of the processing task. In other words, the scale of the target neural network is determined by the scale of the processing task.

Specifically, a mapping relationship between the scale of the processing task and the scale of the target neural network may be preconfigured, and the quantity of neurons at each hidden layer of the target neural network is determined based on the mapping relationship and the scale of the processing task. For example, a quantity of neurons of the target neural network may be set to be directly proportional to a scale of a to-be-handled problem. For example, there is a linear proportional relationship $N=aP$, where $P$ represents the scale of the to-be-processed task, or may be understood as a dimension of input of the target neural network, $N$ represents the quantity of neurons of the target neural network, $a$ is a linear proportional parameter, and $a$ is a positive integer. In a process of determining the scale of the target neural network, a quantity $Q$ of hidden layers of the target neural network may be first fixed, and a quantity of neurons at each hidden layer may be represented as $N_l=\text{ceil}(aP/(b_lQ))$, where $Ceil(\cdot)$ represents a ceiling function, $b_l$ is a proportional parameter of an $l^{\text{th}}$ hidden layer, and a value of $b_l$ meets $\sum_{l=1}^{Q} N_l = aP$. Parameters such as $a$, $Q$, and $b_l$ may be determined in advance through offline attempts. To be specific, different parameter combinations of $a$, $Q$, and $b_l$ are given, after the target neural network is constructed, offline training is performed to check performance of the target neural network, and finally, a parameter combination with good performance is selected. After the parameter combination of $a$, $Q$, and $b_l$ is selected, the quantity $L=Q$ of subsequently used hidden layers is fixed, and the quantity $N_l$ of neurons included at each hidden layer may be calculated by using the foregoing formula.

S420: Obtain a parameter generation network based on the quantity of hidden layers of the target neural network.

The parameter generation network is used to generate parameters (for example, a weight and a bias) of the target neural network. If the quantity of hidden layers of the target neural network is $L$, $m(L+1)$ parameter generation networks are generated. $m$ represents a parameter category of the hidden layer of the neural network, and a value of $m$ is usually 2 (two parameters: a weight and a bias), in other words, $2(L+1)$ parameter generation networks are generated. The $2(L+1)$ parameter generation networks are used to generate weights and biases of connections between layers of the neural network. $L+1$ parameter generation networks may be used to generate the weights (weight parameter generation networks), and the other $L+1$ parameter generation networks are used to generate the biases (bias parameter generation networks).

Specifically, an $l^{\text{th}}$ weight parameter generation network in the $L+1$ weight parameter generation networks may be denoted as $\tilde{W}^l(\bar{i},\bar{j};\theta_{Wl})$, where a value range of $l$ is [1, $L+1$], $\theta_{Wl}$ represents a parameter of the $l^{\text{th}}$ weight parameter generation network, and $\bar{i}, \bar{j}$ represent input of the weight parameter generation network. The $l^{\text{th}}$ weight parameter generation network is used to generate a weight parameter of a connection between an $(l-1)^{\text{th}}$ layer (an example of a second neural network layer) and an $l^{\text{th}}$ layer (an example of a third neural network layer) of the target neural network. When a value of $l$ is 1, the $(l-1)^{\text{th}}$ layer may be understood as an input layer of the target neural network. When a value of $l$ is $L+1$, the $l^{\text{th}}$ layer may be understood as an output layer of the target neural network.

$i$, $j$ respectively represent a relative number of an $i^{\text{th}}$ neuron at the $(l-1)^{\text{th}}$ layer in $N_{l-1}$ neurons at the $(l-1)^{\text{th}}$ layer and a relative number of a $j^{\text{th}}$ neuron at the $l^{\text{th}}$ layer neuron in $N_l$ neurons at the $l^{\text{th}}$ layer, $\bar{i},\bar{j}$ may be respectively defined as $\bar{i} \triangleq i / (N_{l-1} +1)$ and $\bar{j} \triangleq j / (N_l + 1)$, $N_{l-1}$ and $N_l$ respectively represent a quantity of neurons at the $(l-1)^{\text{th}}$ layer and a quantity of neurons at the $l^{\text{th}}$ layer of the target neural network, a value range of $i$ is [1, $N_{l-1}$], and a value range of $j$ is [1, $N_l$].

Similarly, an $l^{\text{th}}$ bias parameter generation network may be denoted as $\tilde{b}^l(\bar{j};\theta_{bl})$, and the $l^{\text{th}}$ bias parameter generation network is used to generate a bias parameter on the $j^{\text{th}}$ neuron at the $l^{\text{th}}$ layer of the target neural network. $\theta_{bl}$ represents a parameter of the $l^{\text{th}}$ bias parameter generation network, $\bar{j}$ represents input of the $l^{\text{th}}$ bias parameter generation network, $\bar{j}$ may be defined as $\bar{j} \triangleq j / (N_l + 1)$, $\bar{j}$ may represent the relative number of the $j^{\text{th}}$ neuron at the $l^{\text{th}}$ layer of the target neural network in the $N_l$ neurons at the $l^{\text{th}}$ layer, and the value range of $j$ is [1, $N_l$].

It can be learned from the foregoing expression of the parameter generation network that an input dimension of the weight parameter generation network is 2, and an output dimension thereof is 1, to be specific, information about the relative number of the $i^{th}$ neuron at the $(l-1)^{th}$ layer and the $j^{th}$ neuron at the $l^{th}$ layer is input, and the weight parameter of the connection between the $(l-1)^{th}$ layer and the $l^{th}$ layer is output; and an input dimension of the bias parameter generation network is 1, and an output dimension thereof is 1, to be specific, information about the relative number of the $j^{th}$ neuron at the $l^{th}$ layer in the neurons at the $l^{th}$ layer is input, and the bias parameter on the $j^{th}$ neuron at the $l^{th}$ layer is output. A structure (a quantity of hidden layers, a connection method, and the like) of the parameter generation network is not limited in this application.

Optionally, the method may further include S421: Initialize the parameter generation network.

Initializing the parameter generation network is initializing the parameters $\theta_{Wl}$ and $\theta_{bl}$ in the parameter generation network. For example, each parameter may be randomly initialized. A specific manner of initializing the parameter generation network is not limited in this application.

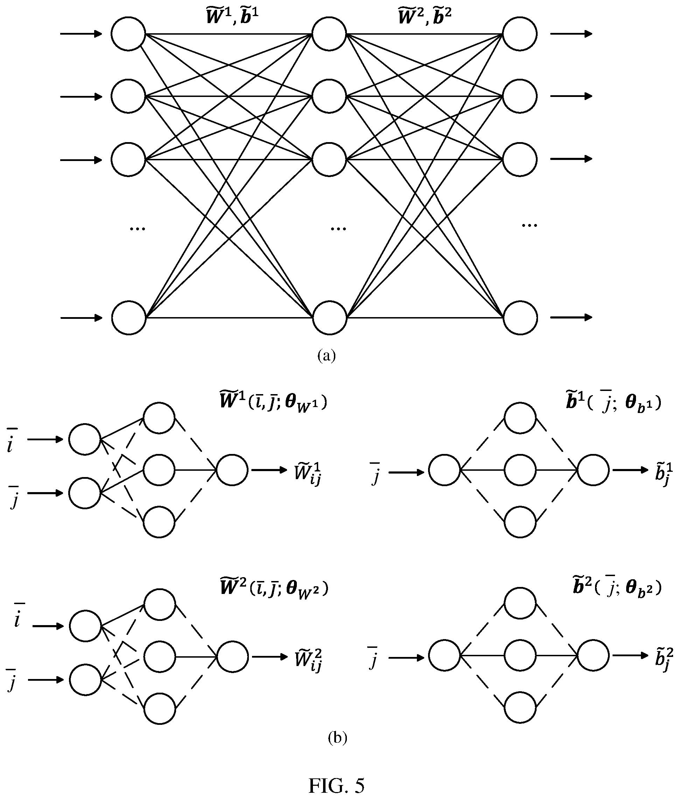

A target neural network including L=1 hidden layer is used as an example, the target neural network is shown in (a) in FIG. 5, and an obtained parameter generation network is shown in (b) in FIG. 5. $\mathbf{W}_{ij}^{l}$ and $\mathbf{b}_{ij}^{l}$ respectively represent a weight and a bias parameter of the target neural network. It can be learned from the foregoing calculation of a quantity of parameter generation networks that the quantity of parameter generation networks is 4. The parameter generation network may use a fully-connected network structure including one hidden layer, and parameters $\theta_{Wl}$ and $\theta_{bl}$ of the parameter generation network may be randomly initialized.

S430: Obtain the target neural network based on parameters generated by the parameter generation network.

Obtaining the target neural network is generating parameters of connections between layers of the target neural network. It can be learned from the foregoing steps that the quantity of hidden layers of the target neural network is $L$, and the quantity $N_l$ of neurons at each hidden layer is determined based on the scale of the processing task. Therefore, generating the parameters of the connections between the layers of the target neural network is obtaining the target neural network. The parameters of the target neural network may be determined by the parameter generation network.

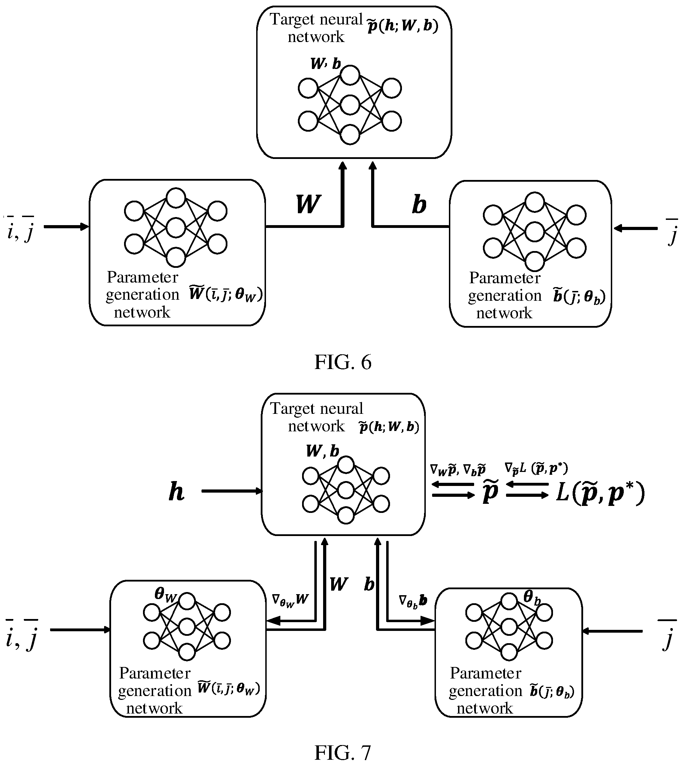

The parameter generation network is obtained by using the foregoing steps, as shown in FIG. 5. Each parameter generation network may obtain one parameter (a weight or a bias) of the target neural network during each time of inference, and the parameter generation network is used a plurality of times to obtain all parameters of the target neural network. FIG. 6 is a schematic diagram of obtaining the target neural network by using the parameter generation network.

After the target neural network is obtained, the parameter generation network may be further trained by using training data, to obtain a parameter generation network (a parameter generation network model) that can generate a target neural network model for performing a specific task. For example, a parameter generation network for an image classification model used for image classification may be generated. For another example, a parameter generation network for a neural network model used for radio resource allocation may be generated.

Specifically, the parameter generation network may be trained by using training data of the processing task of the target neural network. For example, if the target neural network is used for an image processing task, the training data may be an image. Specifically, the image processing task includes image classification, image detection, image recognition, and the like, and a label corresponding to the training data may be a type corresponding to the image, or the like. For another example, when the target neural network is used for a power control task in a wireless communication system, the training data may be channel data between a terminal and a base station, and a label corresponding to the training data may be an optimal power allocation result under a condition of the channel data. A type of the training data is not limited in this embodiment of this application.

To facilitate description of a process of training the parameter generation network, information about a layer is added to parameters of the parameter generation network. To be specific, the weight parameter generation network may be denoted as $\widetilde{\mathbf{W}}(\overline{i},\overline{j};\theta_W) = \{\widetilde{\mathbf{W}}^{l}(\overline{i},\overline{j};\theta_{W^l})\}_{l=1}^{L+1}$, where $\theta_W = \{\theta_{W^l}\}_{l=1}^{L+1}$, and $\theta_{Wl}$ represents a parameter of a parameter generation network used to generate a weight parameter between the $(l-1)^{th}$ layer and the $l^{th}$ layer of the target neural network. When a value of $l$ is 1, $\theta_{Wl}$ represents a parameter of a parameter generation network for generating a weight parameter between an input layer and the first hidden layer of the target neural network. When a value of $l$ is $L + 1$, $\theta_{Wl}$ represents a parameter of a parameter generation network for generating a weight parameter between an $L^{th}$ hidden layer and an output layer of the target neural network. Similarly, the bias parameter generation network may be denoted as $\tilde{\mathbf{b}}(\overline{j};\theta_b) = \{\tilde{\mathbf{b}}^{l}(\overline{j};\theta_{b^l})\}_{l=1}^{L+1}$, where $\theta_b = \{\theta_{b^l}\}_{l=1}^{L+1}$, and $\theta_{bl}$ represents a parameter of a parameter generation network for generating a bias parameter of the $l^{th}$ layer of the target neural network. The parameters $\theta_W$ and $\theta_b$ of the parameter generation network may be trained in a supervised or an unsupervised learning manner.

If the supervised learning manner is used for training, Formula (4) is solved:

$$\min_{\theta_W,\theta_b} \quad \mathbb{E}_{\mathbf{h}}\left\{L\left(\tilde{\mathbf{p}}\left(\mathbf{h};\widetilde{\mathbf{W}}(\overline{i},\overline{j};\theta_W),\tilde{\mathbf{b}}(\overline{j};\theta_b)\right),\mathbf{p}^*(\mathbf{h})\right)\right\} \qquad (4),$$

where

$L(\cdot)$ represents a loss function of supervised learning, and **p*(h)** represents a label of training data.

If the unsupervised learning manner is used for training, Formula (5) is solved:

$$\min_{\theta_W,\theta_b} \quad \mathbb{E}_{\mathbf{h}}\left\{J\left(\mathbf{h},\tilde{\mathbf{p}}\left(\mathbf{h};\widetilde{\mathbf{W}}(\overline{i},\overline{j};\theta_W),\tilde{\mathbf{b}}(\overline{j};\theta_b)\right)\right)\right\} \qquad (5),$$

where

$J(\cdot)$ represents a loss function of unsupervised learning.

Supervised learning is used as an example. A schematic diagram of gradient backhaul in a training process thereof is shown in FIG. 7. During forward propagation in a training phase of a parameter generation network, input $\overline{i}$, $\overline{j}$ or $\overline{j}$ of the parameter generation network is first input to generate parameters **W** and **b** of a target neural network. Then training data **h** is input into the target neural network, and output $\tilde{\mathbf{p}}$ of the target neural network is obtained through inference, where the output result is a result of a task of the target neural network. A difference between $\tilde{\mathbf{p}}$ obtained through inference and optimal **p*** (that is, a label corresponding to the training data) is determined through comparison, and gradients are calculated for all parameters of the parameter generation network by using a loss function through back propagation. $\nabla_{\tilde{\mathbf{p}}} L\left(\tilde{\mathbf{p}},\mathbf{p}^*\right)$ represents a gradient obtained by calculating a derivative of $\tilde{\mathbf{p}}$ by using the loss function $L(\cdot)$, $\nabla_{\mathbf{W}}\tilde{\mathbf{p}}$ and $\nabla_{\mathbf{b}}\tilde{\mathbf{p}}$ respectively represent gradients obtained by calculating derivatives of the parameters **W** and **b** of the target neural network by using $\tilde{\mathbf{p}}$, $\nabla_{\theta_W}\mathbf{W}$ represents a gradient obtained by calculating a derivative of the parameter $\theta_W$ of the parameter generation network by using **W,** and $\nabla_{\theta_b}\mathbf{b}$ represents a gradient obtained by calculating a derivative of $\theta_b$ by using **b.** The parameters of the parameter generation network are updated by using an optimization algorithm, for example, a gradient descent method. The foregoing forward propagation and back propagation processes are repeated until the parameter generation network converges, in other words, the training of the parameter generation network is completed.

Optionally, after a specific quantity of rounds of training are performed on the parameter generation network, convergence determining may be further performed. A convergence determining criterion may be determining whether a maximum quantity of rounds of training is reached, or may be determining whether the target neural network reaches preset performance. The preset performance may be determined by using a neural network evaluation indicator. For example, inference accuracy of the target neural network is determined. If a result of the convergence determining is yes, the training ends; otherwise, the process goes back to S430, to re-initialize the target neural network by using a parameter generation network updated through training, and perform next training and convergence determining. The foregoing process is repeated to complete training the parameter generation network.

It may be understood that in this embodiment of this application, parameters (a weight and a bias) of the target neural network are generated by the parameter generation network, and therefore no training is required. The foregoing process of training the parameter generation network is a process of training parameters, namely, $\theta_{Wl}$ and $\theta_{bl}$, of the parameter generation network by using training data. $0 < l \leq L + 1$.

Optionally, before the parameter generation network is trained, training data may be further sorted for a neural network task that meets a PE property, for example, a radio resource allocation task. Sorting the training data may be understood as sorting data of samples in the training data, for example, sorting the data in descending order of values of the data. Sorting the training data can reduce a quantity of samples required for training the parameter generation network.

In addition, if input distributions of two target neural networks (a quantity of layers is L) with a same quantity of hidden layers are the same and are independent of each other (for example, channel modulus values comply with Rayleigh distribution), sorting the training data can enable connection parameters between neurons with close relative numbers at two adjacent layers of the two target neural networks to be close. To be specific, if input distributions of a target neural network A and a target neural network B are the same and are independent of each other, a weight of a connection line between an $i_A{}^{\text{th}}$ neuron at an $(l\text{-}1)^{\text{th}}$ layer and a $j_A{}^{\text{th}}$ neuron at an $l^{\text{th}}$ layer of the target neural network A is denoted as $W^l_{i_A,j_A}$, a bias on the $j_A{}^{\text{th}}$ neuron at the $l^{\text{th}}$ layer is $b^l_{j_A}$, and quantities of neurons at the $(l\text{-}1)^{\text{th}}$ layer and the $l^{\text{th}}$ layer are respectively $N_{l\text{-}1,A}$ and $N_{l,A}$. A weight of a connection line between an $i_B{}^{\text{th}}$ neuron at an $(l\text{-}1)^{\text{th}}$ layer and

a $j_B$th neuron at an $l$th layer of the target neural network B is $W_{i_B,j_B}^l$, a bias on the $j_B$th neuron at the $l$th layer is $b_{j_B}^l$, and quantities of neurons at the $(l\text{-}1)$th layer and the $l$th layer are respectively $N_{l\text{-}1,B}$ and $N_{l,B}$. If $i_A$ / ($N_{l\text{-}1,A}$ +1) ≈ $i_B$ / ($N_{l\text{-}1,B}$ +1), to be specific, a relative number, at the $(l\text{-}1)$th layer of the target neural network A, of the $i_A$th neuron at the $(l\text{-}1)$th layer of the target neural network A is approximately equal to a relative number, at the $(l\text{-}1)$th layer of the target neural network B, of the $i_B$th neuron at the $(l\text{-}1)$th layer of the target neural network B, and a relative number, at the $l$th layer of the target neural network A, of the $j_A$th neuron at the $l$th layer of the target neural network A is approximately equal to a relative number, at the $l$th layer of the target neural network B, of the $j_B$th neuron at the $l$th layer of the target neural network B, $W_{i_A,j_A}^l \approx W_{i_B,j_B}^l$, and $b_{j_A}^l \approx b_{j_B}^l$.

A radio resource allocation problem is used as an example. In cases of different scales (for example, quantities of users participating in radio resource allocation are different), distributions of different environment statuses are the same and are independent of each other. After sorting, elements with close relative numbers in the environment statuses in the cases of different scales have approximately equal average values. For example, two radio resource allocation scenarios of different scales are considered. An input dimension of a target neural network in Scenario #1 is 10 (for example, there are 10 users in the scenario), and an input dimension of a target neural network in Scenario #2 is 20. In Scenario #1, 10 users may have a plurality of different deployment locations, and 1000 deployment sub-scenarios are generated through random scattering. Similarly, in Scenario #2, 1000 sub-scenarios are also randomly generated. Therefore, in the 1000 sub-scenarios of the 10-user scenario, an environment status of the second user (assuming that the environment status of the second user is represented by one element) has a total of 1000 values (corresponding to the 1000 sub-scenarios). In this case, the 1000 values are averaged to obtain an average value of environment states of the second user, and the average value is approximately equal to an average value of states of the fourth user in the 1000 sub-scenarios of the 20-user scenario.

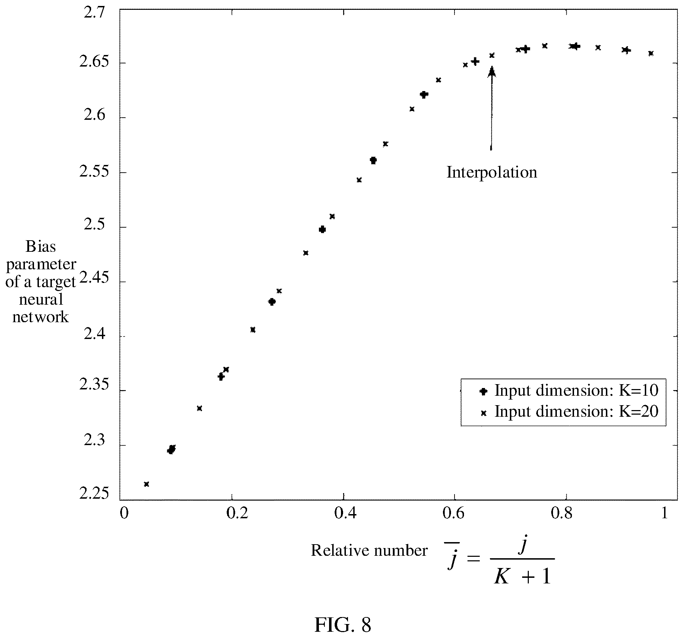

FIG. 8 is a diagram of a function relationship between bias parameter values of target neural networks of different scales and relative numbers of neurons. It can be learned that if the relative number of the neuron is used as input of a function (a parameter neural network), and the bias parameter value of the target neural network is used as output of the function, the parameter values of the target neural networks of different dimensions may be obtained by performing an interpolation operation. In other words, the parameter generation network in this application has good generalization for generating the target neural networks of different dimensions.

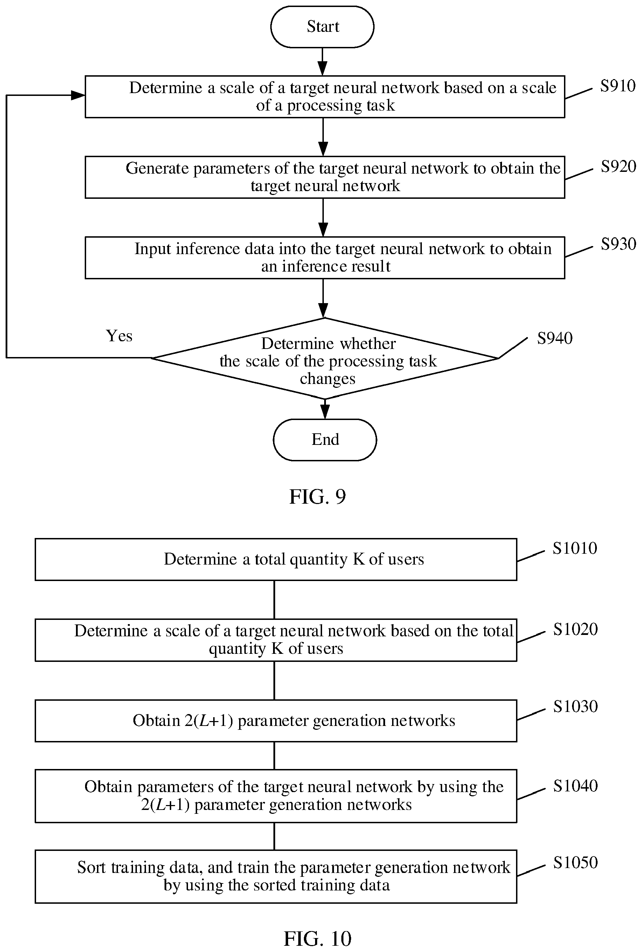

The foregoing describes obtaining and training processes of a parameter generation network. A group of parameter generation network models may be obtained after training of the parameter generation network is completed. The parameter generation network models may be deployed in an actual application scenario (for example, a wireless communication system) to perform inference and obtain a required target neural network model. With reference to FIG. 9, the following describes an inference process of a parameter generation network model.

S910: Determine a scale of a target neural network based on a scale of a processing task.

The scale of the target neural network may be represented by a quantity $N_l$ of neurons at each hidden layer, where $0 < l \le L$ +1. In other words, the quantity of neurons at each hidden layer of the target neural network is determined based on the scale of the processing task.

S920: Generate parameters of the target neural network to obtain a target neural network model.

After the quantity of neurons at each hidden layer of the target neural network is determined, the parameters (including a weight and a bias) of the target neural network may be generated by using the foregoing trained parameter generation network, to determine the target neural network.

S930: Input inference data into the target neural network to obtain an inference result.

Optionally, elements in the inference data may be sorted and then input into the target neural network, to obtain an inference result.

S940: Determine whether the scale of the processing task changes.

If the scale of the processing task changes, S910 to S930 are performed again.

According to the method in this embodiment of this application, when the scale of the processing task changes, the parameter generation network may generate target neural networks of different scales with low complexity. In other words, the parameter generation network has generalization.

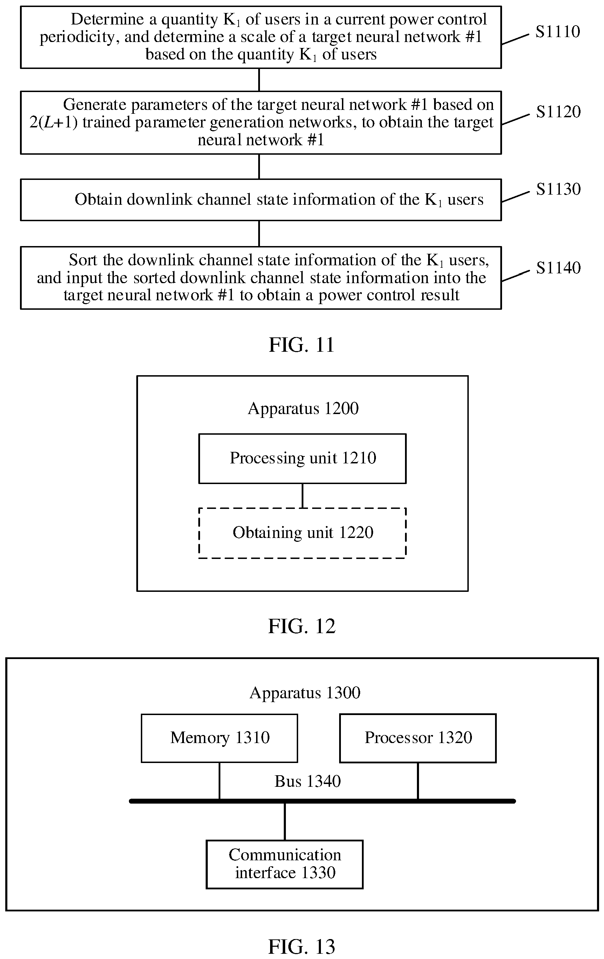

To better understand the neural network construction method provided in embodiments of this application, the following uses, with reference to FIG. 10 and FIG. 11, an example of resolving a single-cell wireless downlink power control problem. As shown in FIG. 10, the method includes at least the following steps.

S1010: Determine a total quantity K of users.

The total quantity K of users may represent a quantity of users participating in wireless downlink power control in the cell.

S1020: Determine a scale of a target neural network (a quantity L of hidden layers and a quantity $N_l$ of neurons at each hidden layer) based on the total quantity K of users.

The target neural network is used to resolve the wireless downlink power control problem. To be specific, the target neural network may input downlink channel state information, and output optimal transmit power used when a base station sends data to the K users. The target neural network may be a fully-connected neural network, and the target neural network has two parameter categories: a weight parameter and a bias parameter.

S1030: Obtain 2(L+1) parameter generation networks.

The parameter generation networks are used to generate weights and biases of the target neural network. $L+1$ parameter generation networks may be used to generate the weights (weight parameter generation networks), and the other $L+1$ parameter generation networks are used to generate the biases (bias parameter generation networks). For specific descriptions of the parameter generation network, refer to S420.

S1040: Obtain parameters of the target neural network by using the 2(L+1) parameter generation networks.

Initial values of the weight parameters and the bias parameters in the target neural network may be generated by using the 2(L+1) parameter generation networks. Subsequently, the initial parameters may be updated by using trained parameter generation networks.

S1050: Sort training data, and train the parameter generation network by using the sorted training data.

Each data sample **(h, p\*)** in the training data includes channel state information $\mathbf{h}=[h_1,..., h_K]$ and an optimal power control policy $\mathbf{p}^* =[\,p_1^*,..., p_K^*\,]$ in the case of the channel state information, where $h_k$ is downlink channel state information between a $k^{th}$ user and the base station, and $p_k^*$ is optimal transmit power used when the base station sends data to the $k^{th}$ user. Sorting the training data may include: sorting k elements in $\mathbf{h}=[h_1, ..., h_K]$ in descending order of absolute values of the k elements, that is, $h_1 \geq h_2 \geq h_3 \geq ... \geq h_K$. A process of training the parameter generation network is similar to that in S440, and details are not described herein again.

The 2($L+1$) parameter generation networks are obtained based on the foregoing steps. The parameter generation network may be deployed on a base station side, and the parameter generation network may be used to generate target neural networks of different scales, which is an inference process of the parameter generation network. The inference process of the parameter generation network is shown in FIG. 11. The inference process includes at least the following steps.

S1110: Determine a quantity $K_1$ of users in a current power control periodicity, and determine a scale of a target neural network #1 based on the quantity $K_1$ of users.

This step is similar to S410, and details are not described herein again.

S1120: Generate a weight parameter and a bias parameter of the target neural network #1 based on the 2($L+1$) trained parameter generation networks, to obtain the target neural network #1.

S1130: Obtain downlink channel state information $\mathbf{h}=[h_1,..., h_K]$ of the $K_1$ users.

The downlink channel state information may be obtained by the user through channel estimation, and fed back to the base station.

S1140: Sort the downlink channel state information of the $K_1$ users in descending order, and input the sorted downlink channel state information into the target neural network #1 to obtain a power control result $\mathbf{p}=[p_1,...,p_K]$.

Optionally, in S1150, downlink communication is performed based on the power control result.

Optionally, if a next power control periodicity is entered, S1110 to S1150 are repeated.

The following describes a neural network construction apparatus in embodiments of this application with reference to FIG. 12. The neural network construction apparatus shown in FIG. 12 may be configured to perform the steps of the neural network construction method in embodiments of this application. The neural network construction apparatus may be an apparatus, for example, a computer or a server, whose computing capability is sufficient to construct a neural network.

FIG. 12 is a schematic block diagram of a neural network construction apparatus according to an embodiment of this application. An apparatus 1200 shown in FIG. 12 includes a processing unit 1210. Optionally, the apparatus 1200 may further include an obtaining unit 1220.

The apparatus 2000 may be configured to perform the steps of the neural network construction method in embodiments of this application. For example, the processing unit 1210 may be configured to perform steps S410 to S440 in the method shown in FIG. 4, or perform steps S910 to S940 in the method shown in FIG. 9, or perform steps S1010 to S1050 in the method shown in FIG. 10, or perform S1110, S1120, and S1140 in the method shown in FIG. 11.

Optionally, the apparatus 2000 may be further configured to generate, by using a trained parameter generation network, a target neural network having a specific function, which may be understood as generating, by using the trained parameter generation network, a target neural network model that can execute a specific task, for example, a target neural network model used to process a wireless downlink power control task or a model for another specific task.

The obtaining unit may be configured to: obtain training data or inference data, train the parameter generation network by using the training data, to obtain a parameter generation network model, and obtain a result of a processing task by using the inference data and the target neural network model. For example, the obtaining unit 1220 may be configured to perform step S1130 in the method shown in FIG. 11.

The apparatus 1200 may further obtain the trained parameter generation network model by using the obtaining unit 1220. The obtaining unit 1220 may be equivalent to a communication interface 1330 in an apparatus 1300 shown in FIG. 13. The trained parameter generation network may be obtained by using the communication interface 1330. Training of the parameter generation network may be completed through offline training. Alternatively, the obtaining unit 1220 may be equivalent to a processor 1320 in the apparatus 1300 shown in FIG. 13. In this case, the trained parameter generation network may be obtained from a memory 1310 by using the processor 1320.

In addition, the processing unit 1210 in the apparatus 1200 shown in FIG. 12 may be equivalent to the processor 1320 in the apparatus 1300 shown in FIG. 13.

It should be noted that the apparatus 1200 is reflected in a form of a functional unit. The term "unit" herein may be implemented in a form of software and/or hardware. This is not specifically limited.

For example, the "unit" may be a software program, a hardware circuit, or a combination thereof that implements the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a combinatorial logic circuit, and/or another appropriate component that supports the described function.

Therefore, in the examples described in embodiments of this application, the units can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

FIG. 13 is a schematic diagram of a hardware structure of a neural network construction apparatus according to an embodiment of this application. An apparatus 1300 shown in FIG. 13 includes a memory 1310, a processor 13020, a communication interface 1330, and a bus 1340. The memory 1310, the processor 1320, and the communication interface 1330 are communicatively connected to each other through the bus 1340.

The memory 1310 may be a read-only memory (read only memory, ROM), a static storage device, a dynamic storage device, or a random access memory (random access memory, RAM). The memory 1310 may store a program. When the program stored in the memory 1310 is executed by the processor 1320, the processor 1320 and the communication interface 1330 are configured to perform the steps of the neural network construction method in embodiments of this application.

The processor 1320 may be a general-purpose central processing unit (central processing unit, CPU), a microprocessor, an application-specific integrated circuit (application specific integrated circuit, ASIC), a graphics processing unit (graphics processing unit, GPU), or one or more integrated circuits, to implement functions that need to be performed by the units in the neural network construction apparatus in embodiments of this application, or perform the steps of the neural network construction method in embodiments of this application.

The processor 1320 may alternatively be an integrated circuit chip, and has a signal processing capability. In an implementation process, the steps of the neural network construction method in embodiments of this application may be completed by using an integrated logic circuit of hardware in the processor 1320 or instructions in a form of software.

The processor 1320 may alternatively be a general-purpose processor, a digital signal processor (digital signal processing, DSP), an ASIC, an FPGA or another programmable logic device, a discrete gate or a transistor logic device, or a discrete hardware component. The processor 1320 may implement or perform the methods, steps, and logical block diagrams that are disclosed in embodiments of this application. The general-purpose processor may be a microprocessor, or the processor may be any conventional processor or the like. The steps of the neural network construction method disclosed with reference to embodiments of this application may be directly performed and completed by using a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1310. The processor 1320 reads information in the memory 1310, and completes, in combination with hardware of the processor 1320, functions that need to be performed by the units included in the neural network construction apparatus in this embodiment of this application, or performs the steps of the neural network construction method in embodiments of this application.

The communication interface 1330 is, for example, a transceiver apparatus such as a transceiver, to implement communication between the apparatus 1300 and another device or a communication network. For example, a control parameter corresponding to an inference result may be sent through the communication interface 1330.

The bus 1340 may include a path for transmitting information between components (for example, the memory 1310, the processor 1320, and the communication interface 1330) of the apparatus 1300.

It should be noted that although only the memory, the processor, and the communication interface are shown in the apparatus 1300, in a specific implementation process, a person skilled in the art should understand that the apparatus 1300 may further include another component necessary for normal running. In addition, based on a specific requirement, a person skilled in the art should understand that the apparatus 1300 may further include a hardware component for implementing another additional function. In addition, a person skilled in the art should understand that the apparatus 1300 may alternatively include only a component required for implementing embodiments of this application, and does not need to include all components shown in FIG. 13.

This application does not limit a specific structure of an execution body of the method provided in embodiments of this application, provided that a program that records code of the method provided in embodiments of this application can be run to perform communication according to the method provided in embodiments of this application. For example, the method provided in embodiments of this application may be performed by a network device, or a function module in the network device that can invoke and execute a program.

Various aspects or features of this application may be implemented as methods, apparatuses, or artifacts using standard programming and/or engineering techniques. As used herein, the term "artifact" may encompass a computer program accessible from any computer-readable device, carrier, or medium. For example, the computer-readable medium may include but is not limited to a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive).

The various storage media described herein may represent one or more devices and/or other machine-readable media for storing information. The term "machine-readable medium" may include but is not limited to wireless channels and various other media capable of storing, including, and/or carrying instructions and/or data.

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described herein is intended to include but is not limited to these memories and any other suitable type of memory.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

It may be clearly understood by a person skilled in the art that, for the purpose of convenient and brief description, for a detailed working process of the foregoing apparatus and unit, refer to a corresponding process in the foregoing method embodiments, and details are not described herein again.

In the several embodiments provided in this application, it should be understood that the disclosed apparatus and method may be implemented in other manners. For example, the described apparatus embodiment is merely an example. For example, division into the units is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one position, or may be distributed on a plurality of network units. Some or all of the units may be selected based on actual requirements to achieve the objectives of the solutions of embodiments.

In addition, functional units in embodiments of this application may be integrated into one unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, a network device, or the like) to perform all or some of the steps of the method described in embodiments of this application. The storage medium may include but is not limited to any medium that can store program code, such as a USB flash disk, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A neural network construction method, comprising:

   generating parameters of a target neural network based on a parameter generation network, wherein input of the parameter generation network comprises information about a relative number of a neuron in the target neural network, the relative number of the neuron represents a relative location of the neuron at a first neural network layer, and the first neural network layer is a layer at which the neuron in the target neural network is located; and
   constructing the target neural network based on the parameters of the target neural network.

2. The method according to claim 1, wherein before the generating parameters of a target neural network based on a parameter generation network, the method further comprises:

   obtaining N parameter generation networks, wherein
   N is determined by a quantity M of parameter categories of the target neural network and a quantity L of hidden layers of the target neural network, and M and L are positive integers.

3. The method according to claim 1 or 2, wherein the target neural network comprises a second neural network layer and a third neural network layer, the second neural network layer comprises $N_1$ neurons, the third neural network layer comprises $N_2$ neurons, and the generating parameters of a target neural network based on a parameter generation network comprises:
   inputting a relative number of an $i^{th}$ neuron at the second neural network layer and a relative number of a $j^{th}$ neuron at the third neural network layer into a first parameter generation network, to generate a weight parameter of a connection between the $i^{th}$ neuron at the second neural network layer and the $j^{th}$ neuron at the third neural network layer, wherein the first parameter generation network is a parameter generation network in the N parameter generation networks that is used to generate a weight parameter between the second neural network layer and the third neural network layer, $1 \leq i \leq N_1$, and $1 \leq j \leq N_2$.

4. The method according to claim 1 or 2, wherein the target neural network comprises a second neural network layer, the second neural network layer comprises $N_1$ neurons, and the generating parameters of a target neural network based on a parameter generation network comprises:
   inputting a relative number of an $i^{th}$ neuron at the second neural network layer into a second parameter generation network, to generate a bias parameter on the $i^{th}$ neuron at the second neural network layer, wherein the second parameter generation network is a parameter generation network in the N parameter generation networks that is used to generate a bias parameter of the second neural network layer, and $1 \leq i \leq N_1$.

5. The method according to any one of claims 1 to 4, wherein before the generating parameters of a target neural network based on a parameter generation network, the method further comprises:
   determining the quantity L of hidden layers of the target neural network and a quantity of neurons at each of the L hidden layers based on a scale of a processing task of the target neural network, wherein L is a positive integer.

6. The method according to any one of claims 1 to 5, wherein before the generating parameters of a target neural network based on a parameter generation network, the method further comprises:
   training the parameter generation network based on training data of the processing task of the target neural network.

7. The method according to claim 6, wherein the training the parameter generation network based on training data of the processing task of the target neural network comprises:

   sorting training data, wherein the training data is the training data of the processing task of the target neural network;

inputting the sorted training data into the target neural network to obtain output of the target neural network; and updating parameters of the parameter generation network based on a loss function, to train the parameter generation network, wherein the loss function is used to update the parameters of the parameter generation network based on the output of the target neural network and a label of the training data.

8. The method according to claim 7, wherein after the generating parameters of a target neural network based on a parameter generation network, the method further comprises:

if the scale of the processing task of the target neural network changes, re-determining the quantity of neurons at each of the L hidden layers based on the scale of the processing task; and
updating the parameters of the target neural network by using the trained parameter generation network.

9. A neural network construction apparatus, comprising:

a processing unit, configured to generate parameters of a target neural network based on a parameter generation network, wherein input of the parameter generation network comprises information about a relative number of a neuron in the target neural network, the relative number of the neuron represents a relative location of the neuron at a first neural network layer, and the first neural network layer is a layer at which the neuron in the target neural network is located, wherein
the processing unit is further configured to construct the target neural network based on the parameters of the target neural network.

10. The apparatus according to claim 9, wherein the apparatus further comprises:

an obtaining unit, configured to obtain N parameter generation networks, wherein
N is determined by a quantity M of parameter categories of the target neural network and a quantity L of hidden layers of the target neural network, and M and L are positive integers.

11. The apparatus according to claim 9 or 10, wherein the target neural network comprises a second neural network layer and a third neural network layer, the second neural network layer comprises $N_1$ neurons, the third neural network layer comprises $N_2$ neurons, and the processing unit is specifically configured to:
input a relative number of an $i^{th}$ neuron at the second neural network layer and a relative number of a $j^{th}$ neuron at the third neural network layer into a first parameter generation network, to generate a weight parameter of a connection between the $i^{th}$ neuron at the second neural network layer and the $j^{th}$ neuron at the third neural network layer, wherein the first parameter generation network is a parameter generation network in the N parameter generation networks that is used to generate a weight parameter between the second neural network layer and the third neural network layer, $1 \leq i \leq N_1$, and $1 \leq j \leq N_2$.

12. The apparatus according to claim 9 or 10, wherein the target neural network comprises a second neural network layer, the second neural network layer comprises $N_1$ neurons, and the processing unit is specifically configured to:
input a relative number of an $i^{th}$ neuron at the second neural network layer into a second parameter generation network, to generate a bias parameter on the $i^{th}$ neuron at the second neural network layer, wherein the second parameter generation network is a parameter generation network in the N parameter generation networks that is used to generate a bias parameter of the second neural network layer, and $1 \leq i \leq N_1$.

13. The apparatus according to any one of claims 9 to 12, wherein the processing unit is further configured to:
determine the quantity L of hidden layers of the target neural network and a quantity of neurons at each of the L hidden layers based on a scale of a processing task of the target neural network, wherein L is a positive integer.

14. The apparatus according to any one of claims 9 to 13, wherein the processing unit is further configured to:
train the parameter generation network based on training data of the processing task of the target neural network.

15. The apparatus according to claim 14, wherein the processing unit is specifically configured to:

sort training data, wherein the training data is the training data of the processing task of the target neural network;
input the sorted training data into the target neural network to obtain output of the target neural network; and
update parameters of the parameter generation network based on a loss function, to train the parameter generation network, wherein the loss function is used to update the parameters of the parameter generation network based on the output of the target neural network and a label of the training data.

16. The apparatus according to claim 15, wherein the processing unit is further configured to:

if the scale of the processing task of the target neural network changes, re-determine the quantity of neurons at each of the L hidden layers based on the scale of the processing task; and
update the parameters of the target neural network by using the trained parameter generation network.

17. A neural network model operation apparatus,
comprising a processor and a memory, wherein the memory is configured to store program instructions, and the processor is configured to invoke the program instructions to perform the method according to any one of claims 1 to 8.

18. A computer-readable storage medium, wherein
the computer-readable storage medium is configured to store program code to be executed by a device, and the program code is used to perform the method according to any one of claims 1 to 8.

19. A computer program product comprising instructions, wherein
when the computer program product runs on a computer, the computer is enabled to perform the method according to any one of claims 1 to 8.

20. A chip, comprising a processor and a data interface, wherein the processor reads, by using the data interface, instructions stored in a memory to perform the method according to any one of claims 1 to 8.

FIG. 1

FIG. 2

System architecture 100

Data collection
device 160

Data flow

Database
130

Training device
120

Execution device 110

Data flow

Input
data

Client
device
140

I/O
interface
112

Target model/rule
101

Calculation module 111

Data storage
system 150

Output
result

FIG. 3

| Determine a scale of a target neural network based on a scale of a processing task, where the scale of the target neural network is determined by a quantity of hidden layers of the target neural network | S410 |

| Obtain a parameter generation network based on the quantity of hidden layers of the target neural network, where input of the parameter generation network includes information about a relative number of a neuron in the target neural network | S420 |

| Obtain the target neural network based on parameters generated by the parameter generation network | S430 |

FIG. 4

$$\widetilde{\boldsymbol{W}}^1, \widetilde{\boldsymbol{b}}^1 \qquad \widetilde{\boldsymbol{W}}^2, \widetilde{\boldsymbol{b}}^2$$

(a)

$$\widetilde{\boldsymbol{W}}^1(\bar{\imath}, \bar{\jmath}; \boldsymbol{\theta}_{W^1}) \qquad \widetilde{\boldsymbol{b}}^1(\bar{\jmath}; \boldsymbol{\theta}_{b^1})$$

$$\bar{\imath} \rightarrow \quad \bar{\jmath} \rightarrow \quad \widetilde{W}_{ij}^1 \qquad \bar{\jmath} \rightarrow \quad \widetilde{b}_j^1$$

$$\widetilde{\boldsymbol{W}}^2(\bar{\imath}, \bar{\jmath}; \boldsymbol{\theta}_{W^2}) \qquad \widetilde{\boldsymbol{b}}^2(\bar{\jmath}; \boldsymbol{\theta}_{b^2})$$

$$\bar{\imath} \rightarrow \quad \bar{\jmath} \rightarrow \quad \widetilde{W}_{ij}^2 \qquad \bar{\jmath} \rightarrow \quad \widetilde{b}_j^2$$

(b)

FIG. 5

FIG. 6

FIG. 7

FIG. 8

Start

Determine a scale of a target neural network based on a scale of a processing task — S910

Generate parameters of the target neural network to obtain the target neural network — S920

Input inference data into the target neural network to obtain an inference result — S930

Yes — Determine whether the scale of the processing task changes — S940

End

FIG. 9

Determine a total quantity K of users — S1010

Determine a scale of a target neural network based on the total quantity K of users — S1020

Obtain $2(L+1)$ parameter generation networks — S1030

Obtain parameters of the target neural network by using the $2(L+1)$ parameter generation networks — S1040

Sort training data, and train the parameter generation network by using the sorted training data — S1050

FIG. 10

Determine a quantity $K_1$ of users in a current power control periodicity, and determine a scale of a target neural network #1 based on the quantity $K_1$ of users

S1110

Generate parameters of the target neural network #1 based on $2(L+1)$ trained parameter generation networks, to obtain the target neural network #1

S1120

Obtain downlink channel state information of the $K_1$ users

S1130

Sort the downlink channel state information of the $K_1$ users, and input the sorted downlink channel state information into the target neural network #1 to obtain a power control result

S1140

FIG. 11

Apparatus 1200

Processing unit 1210

Obtaining unit 1220

FIG. 12

Apparatus 1300

Memory 1310

Processor 1320

Bus 1340

Communication interface 1330

FIG. 13

## INTERNATIONAL SEARCH REPORT

| International application No. |
|---|
| **PCT/CN2022/124843** |

### A.     CLASSIFICATION OF SUBJECT MATTER

G06N 3/04(2006.01)i

According to International Patent Classification (IPC) or to both national classification and IPC

### B.     FIELDS SEARCHED

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNPAT; CNKI; WPI; EPODOC: 神经, 网络, 构建, 参数, 参数生成网络, 目标, 神经元, 层, 隐藏层, 权重, 标签, 标记, 训练, 样本, 标号, neural, network, build, establish, parameter, generate, target, layer, hidden, weight, label, mark, train, sample

### C.     DOCUMENTS CONSIDERED TO BE RELEVANT

| Category* | Citation of document, with indication, where appropriate, of the relevant passages | Relevant to claim No. |
|---|---|---|
| A | CN 108229526 A (BEIJING SENSETIME SCIENCE TECHNOLOGY DEVELOPMENT CO., LTD.) 29 June 2018 (2018-06-29)<br>description, paragraphs [0066]-[0146] | 1-20 |
| A | CN 112418392 A (HUAWEI TECHNOLOGIES CO., LTD.) 26 February 2021 (2021-02-26)<br>entire document | 1-20 |
| A | US 2019385704 A1 (ORBAI TECHNOLOGIES, INC.) 19 December 2019 (2019-12-19)<br>entire document | 1-20 |
| A | CN 109063829 A (TAIKANG INSURANCE GROUP CO., LTD. et al.) 21 December 2018 (2018-12-21)<br>entire document | 1-20 |
| A | CN 110163345 A (TENCENT TECHNOLOGY SHENZHEN CO., LTD.) 23 August 2019 (2019-08-23)<br>entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 December 2022** | **21 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/124843**

| Patent document cited in search report | | | Publication date (day/month/year) | Patent family member(s) | Publication date (day/month/year) |
|---|---|---|---|---|---|
| CN | 108229526 | A | 29 June 2018 | None | |
| CN | 112418392 | A | 26 February 2021 | None | |
| US | 2019385704 | A1 | 19 December 2019 | None | |
| CN | 109063829 | A | 21 December 2018 | None | |
| CN | 110163345 | A | 23 August 2019 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111271593